(19) **Europäisches Patentamt / European Patent Office / Office européen des brevets**

(11) **EP 4 768 430 A1**

(12) # EUROPEAN PATENT APPLICATION

(43) Date of publication:
01.07.2026 Bulletin 2026/27

(21) Application number: 25226396.7

(22) Date of filing: 22.12.2025

(51) International Patent Classification (IPC):
$C01B\ 25/45^{(2006.01)}$   $H01M\ 4/136^{(2010.01)}$
$H01M\ 4/36^{(2006.01)}$   $H01M\ 4/58^{(2010.01)}$
$H01M\ 4/62^{(2006.01)}$   $H01M\ 10/0525^{(2010.01)}$

(52) Cooperative Patent Classification (CPC):
H01M 4/5825; C01B 25/45; H01M 4/136;
H01M 4/366; H01M 4/62; H01M 4/625;
H01M 10/0525

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.12.2024 JP 2024231681

(71) Applicant: Toyota Jidosha Kabushiki Kaisha
Toyota-shi, Aichi-ken 471-8571 (JP)

(72) Inventors:
• OHSAWA, Ryosuke
  Toyota-shi, 471-8571 (JP)
• ISHIGAKI, Yuki
  Toyota-shi, 471-8571 (JP)
• KOSAKA, Daichi
  Toyota-shi, 471-8571 (JP)
• MAHARA, Takanori
  Toyota-shi, 471-8571 (JP)

(74) Representative: Kuhnen & Wacker
Patent- und Rechtsanwaltsbüro PartG mbB
Prinz-Ludwig-Straße 40 A
85354 Freising (DE)

(54) **CATHODE ACTIVE MATERIAL, BATTERY, AND METHOD FOR PRODUCING CATHODE ACTIVE MATERIAL**

(57)  A cathode active material includes a primary particle (1) and a coating (5). The primary particle (1) includes an olivine phosphate compound. The olivine phosphate compound includes at least one selected from the group consisting of lithium manganese phosphate and lithium manganese iron phosphate. The primary particle (1) is doped with Me. The Me is a typical metal element serving as a divalent cation. The coating (5) covers at least part of a surface of the primary particle (1). The coating (5) contains carbon. At least one selected from the group consisting of an Me-C bond and an Me-O-C bond is detected by X-ray photoelectron spectroscopy.

FIG. 1

EP 4 768 430 A1

**Description**

BACKGROUND OF THE INVENTION

1. Field of the Invention

The present disclosure relates to a cathode active material, a battery, and a method for producing a cathode active material.

2. Description of Related Art

Japanese Unexamined Patent Application Publication No. 2021-9838 (JP 2021-9838 A) discloses a cathode active material in which the surface of a lithium manganese iron phosphate (hereinafter may be abbreviated to "LMFP") particle is coated with carbon.

SUMMARY OF THE INVENTION

To improve battery performance, olivine phosphate compounds such as lithium manganese phosphate (LMP) and LMFP have been developed. In liquid batteries, a trace of mixed water may react with a fluoride such as $LiPF_6$ contained in an electrolyte solution to produce hydrogen fluoride (HF). When HF reacts with the olivine phosphate compound and manganese (Mn) is continuously eluted from the surface, the crystal structure of the olivine phosphate compound may be destroyed, resulting in a decrease in capacity retention rate.

The present disclosure provides a positive electrode active material, a battery, and a method for producing the positive electrode active material.

Technical configurations and functions and effects of the present disclosure will be described below. An action mechanism according to the present disclosure includes estimation. The action mechanism does not limit the technical scope of the present disclosure.

One aspect of the present disclosure provides a cathode active material. [1] The cathode active material includes a primary particle and a coating. The primary particle includes an olivine phosphate compound. The olivine phosphate compound includes at least one selected from the group consisting of lithium manganese phosphate and lithium manganese iron phosphate. The primary particle is doped with Me. The Me is a typical metal element serving as a divalent cation. The coating covers at least part of a surface of the primary particle. The coating contains carbon. At least one selected from the group consisting of an Me-C bond and an Me-O-C bond is detected by X-ray photoelectron spectroscopy.

Information on the outermost surface of the measurement target (cathode active material) is obtained by the X-ray photoelectron spectroscopy (XPS). That is, the chemical bonding state of elements measured by the XPS is considered to be the chemical bonding state of elements in the coating. Since the primary particle is doped with the element Me and at least one selected from the group consisting of the Me-C bond and the Me-O-C bond is present on the surface of the primary particle, elution of Mn can be suppressed. As a result, improvement in durability is expected.

[2] In the cathode active material according to the above aspect, the Me may contain Zn.

Since the Me is zinc (Zn), further improvement in durability is expected.

[3] In the cathode active material according to the above aspect, the olivine phosphate compound may have a composition represented by a general formula: $Li_aMn_bFe_cMeaPO_4$. In the general formula, relationships of $0.7 \leq a \leq 1.2$, $0.5 \leq b \leq 0.9$, $0.1 \leq c \leq 0.5$, $0.005 \leq d \leq 0.05$, and $b + c + d = 1$ may be satisfied.

Improvement in durability is expected when the Me is included in a certain amount.

[4] In the cathode active material according to the above aspect, in the general formula, a relationship of $d/(b + c) \geq 0.01$ may be satisfied.

Since the relationship of "$d/(b + c) \geq 0.01$" is satisfied, further improvement in durability is expected.

[5] In the cathode active material according to the above aspect, the primary particle may constitute a secondary particle. The primary particle may be a single particle. The secondary particle may be an aggregate of a plurality of the primary particle.

[6] Another aspect of the present disclosure provides a battery. The battery includes the cathode active material according to any one of [1] to [5].

[7] The battery according to the above aspect may have a bipolar structure.

[8] Another aspect of the present disclosure provides a method for producing a cathode active material. The method for producing the cathode active material includes:

(a) forming a first slurry by mixing a manganese compound, a lithium compound, a phosphate compound, a carbon source, and a first solvent;

(b) forming first precursor particles by drying the first slurry;

(c) forming second precursor particles by subjecting the first precursor particles to first heat treatment;

(d) forming a second slurry by mixing the second precursor particles, a chelate compound, and a second solvent; and

(e) producing an olivine phosphate compound by drying the second slurry.

The olivine phosphate compound includes a coating. The chelate compound includes Me. The Me is a typical metal element serving as a divalent cation. The olivine phosphate compound is doped with at least part of the Me.

Through the production process according to [8], production of the cathode active material according to [1] can be expected.

[9] In the method for producing the cathode active material according to the above aspect, the chelate compound may include a sugar carboxylic acid.

An embodiment of the present disclosure (hereinafter may be abbreviated to "present embodiment") and an example of the present disclosure (hereinafter may be abbreviated to "present example") will be described. It should be noted, however, that the present embodiment and the present example do not limit the technical scope of the present disclosure. The present embodiment and the present example are exemplary in all respects. The present embodiment and the present example are not limiting. The technical scope of the present disclosure encompasses all changes within the meaning and scope equivalent to the description of the claims. For example, it is anticipated from the beginning that any configurations may be extracted from the present embodiment and arbitrarily combined.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram showing a secondary particle according to an embodiment;

FIG. 2 is a graph showing an XPS spectrum of an Me-C bond and an Me-O-C bond;

FIG. 3 is a schematic flowchart showing a method for producing a cathode active material according to the embodiment;

FIG. 4 is a schematic perspective view of a battery according to the embodiment;

FIG. 5 is a schematic sectional view taken along line V-V in FIG. 4; and

FIG. 6 is a table showing experimental results of Nos. 1 to 6 in examples.

DETAILED DESCRIPTION OF EMBODIMENTS

Terms and Phrases

"Comprise," "include," "have," and variations thereof are open ended expressions. A configuration expressed as open ended may or may not further include additional elements in addition to the required elements. The term "consist of" is a closed ended expression. However, even configurations that are expressed by closed ended terms can include normally-associated impurities and additional elements that are irrelevant to the pertinent technology. The term "substantially consist of" is a semi-closed ended expression. Configurations that are expressed by semi-closed ended terms allow addition of elements that do not substantially affect the basic and novel characteristics of the pertinent technology.

The words such as "may" and "can" are used in a permissive sense, meaning that "it is possible," rather than in a mandatory sense, meaning "must."

The order in which a plurality of steps, actions, operations, etc. included in various methods is performed is not limited to the order described herein unless otherwise specified. For example, a plurality of steps may proceed concurrently. For example, the order of a plurality of steps may be reversed.

The terms "first," "second," etc. are only used to distinguish a plurality of elements. Such terms do not limit the elements to which they are affixed. Such terms are irrelevant to, for example, the order and importance of the elements to which they are affixed.

For example, the phrase "either or both of A and B" includes "A or B" and "A and B." The phrase "either or both of A and B" may also be written as "A and/or B."

Geometric terms are not to be construed in a strict sense. Examples of such geometric terms include "parallel," "perpendicular," and "orthogonal." For example, directions, angles, and distances may relatively vary within a range in which substantially the same or similar functions are obtained. The geometric terms can include tolerances, variations, etc. regarding, for example, designing, working, and manufacturing. There are cases in which dimensional relationships in the drawings do not match actual dimensional relationships. There are cases in which the dimensional relationships in the drawings are changed to facilitate understanding by the reader. There are cases in which the length, width, thickness, etc. are changed. There are cases in which part of configurations are omitted.

Elements described in a "singular form" may also include a plural form unless otherwise specified. For example, a particle may refer to a plurality of particles, an aggregate of particles, or a powdery or granular substance.

The numerical ranges such as "m% to n%" are inclusive ranges including their upper and lower limit values unless otherwise specified. That is, "m% to n%" indicates the numerical range of "m% or more and n% or less." Further, "m% or more and n% or less" includes "more than m% and less than n%." The phrases "equal to or more than" and "equal to or less than" are represented by inequality signs "≥" and "≤" with equal signs. The phrases "more than" and "less than" are represented by inequality signs ">" and "<" without equal signs. A numerical value selected as desired from the numerical range may be set to a new upper limit value or a new lower limit value. For example, a new numerical range may be set by combining as desired a numerical value in the numerical range and a numerical value shown in a different part of the present specification, in a table, in the drawings, etc.

All numerical values should be interpreted as having the term "about" in front of them. The term "about" can mean, for example, ±5%, ±3%, or ±1%. All numerical values can be approximate values that can change depending on the application of the pertinent technology. All numerical values can be expressed in significant figures. Measured values can be average values of measurements that are made multiple times unless otherwise specified. The number of times of measurements may be 3 times or more, 5 times or more, or 10 times or more. Generally, as the number of measurements increases, the reliability of the average value is expected to improve more. Measured values can be rounded off based on the number of digits of the significant figures. Measured values can include error etc. associated with, for example, the detection limit of a measuring device.

The devices, software, etc. used for measurement of various values are merely examples. Items that are equivalent to devices etc. that are exemplified may also be used. When equivalent items are used, measurement conditions may be adjusted in accordance with the device.

XPS analysis is performed by the following procedure. A sample powder made of a cathode active material is set in an XPS device. For example, LMFP doped with Zn as Me is set. XPS analysis conditions are, for example, as follows.

Analysis device: PHI 5000 VersaProbe III (manufactured by ULVAC-PHI, Inc.)
X-ray source: Al Kα radiation
Acceleration voltage: 15 kV
Beam diameter: 100 μmφ

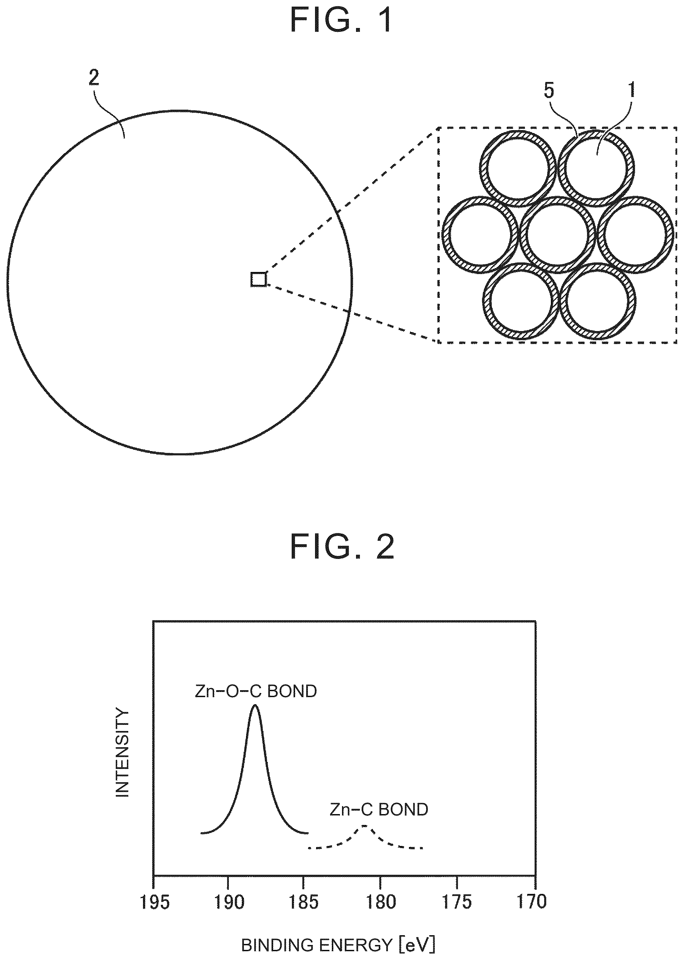

The XPS analysis provides analysis results (X-ray photoelectron spectroscopy spectrum) for elements contained in the outermost surface of the cathode active material. In the X-ray photoelectron spectroscopy spectrum, the horizontal axis represents binding energy (eV) and the vertical axis represents spectral intensity (the number of X-ray photoelectrons). In the X-ray photoelectron spectroscopy spectrum corresponding to Zn, a peak can be observed at 180.5 eV to 182.5 eV when LMFP includes a Zn-C bond, and a peak can be observed at 187.5 eV to 189.5 eV when LMFP includes a Zn-O-C bond (see FIG. 2).

The chemical composition of a compound can be measured by inductively coupled plasma atomic emission spectroscopy (ICP-AES). A sample solution is prepared by dissolving 0.1 g of the sample (e.g., a cathode active material) in a mixed acid (10 ml) of hydrochloric acid and sulfuric acid. The sample solution is then diluted to an appropriate concentration using a volumetric flask. After dilution, composition analysis is performed using an ICP-AES device. For example, product name "PS3520UVDDII (manufactured by Hitachi High-Tech Science Corporation)" may be used.

"D50" indicates the particle size at which a cumulative value becomes 50% in a volume-based particle size distribution (cumulative distribution). D50 can be measured by, for example, a laser diffraction particle size distribution measuring device.

The "maximum Feret diameter" refers to the length of the long side of a circumscribing quadrangle (rectangle or square) of a particle. When the circumscribing quadrangle is a square, the length of the long side indicates the length of one side.

A stoichiometric formula represents a representative composition of a compound. The compound may have a non-stoichiometric composition. For example, "$Al_2O_3$" is not limited to compounds having a mole ratio of "Al/O = 2/3." Unless otherwise specified, "$Al_2O_3$" refers to compounds containing Al and O in any mole ratio. For example, the compound may be doped with a trace element. Al and O may be partially substituted with another element.

A "derivative" refers to a compound in which part of a parent compound has been modified by at least one method selected from the group consisting of introduction of a functional group, substitution of an atom, oxidation, reduction, and other chemical reactions. The modification may be made at one site or at a plurality of sites. A "substituent" may include, for example, at least one selected from the group consisting of an alkyl group, an alkenyl group, an alkynyl group, a cycloalkyl group, an unsaturated cycloalkyl group, an aromatic group, a heterocyclic group, a halogen atom (F, Cl, Br, I, etc.), an OH group, a SH group, a CN group, a SCN group, an OCN group, a nitro group, an alkoxy group, an unsaturated alkoxy group, an amino group, an alkylamino group, a dialkylamino group, an aryloxy group, an acyl group, an alkoxycarbonyl group, an acyloxy group, an aryloxycarbonyl group, an acylamino group, an alkoxycarbonylamino group, an aryloxycarbonylamino group, a sulfonylamino group, a sulfamoyl group, a carbamoyl group, an alkylthio group, an arylthio group, a sulfonyl group, a sulfinyl group, a ureido group, a phosphoric acid amide group, a sulfo group, a carboxy group, a hydroxamic acid group, a sulfino group, a hydrazino group, an imino group, and a silyl group. These substituents may further be substituted. When there are two or more substituents, the substituents may be the same or different. A plurality of substituents may be bonded to each other to form a ring.

Cathode Active Material

FIG. 1 is a conceptual diagram showing a secondary particle according to the present embodiment. The cathode active material includes primary particles 1 and coatings 5. The "primary particle 1" is the smallest unit of a particle. The primary particles 1 may be present alone without being aggregated. The primary particle 1 that is present alone is also referred to as "single particle." The primary particles 1 may form a secondary particle 2. The cathode active material may be, for example, a powder of the secondary particles 2. The D50 of the cathode active material may be, for example, 5 $\mu$m or more, 10 $\mu$m or more, 15 $\mu$m or more, or 20 $\mu$m or more. The D50 of the cathode active material may be, for example, 30 $\mu$m or less, 25 $\mu$m or less, 20 $\mu$m or less, 15 $\mu$m or less, or 10 $\mu$m or less.

The secondary particle 2 is an aggregate of the primary particles 1. The secondary particle 2 may have any shape. The secondary particle 2 may have, for example, a spherical shape, a rod shape, or an angular shape. The spherical secondary particle 2 is expected to improve, for example, filling properties. The sphericity of the secondary particle 2 may be, for example, 0.85 or more, 0.90 or more, or 0.95 or more. The sphericity of the secondary particle 2 may be, for example, 1 or less, 0.95, or 0.90 or less. The "sphericity" refers to the circularity in a scanning electron microscope (SEM) image (two-dimensional image). The sphericity (circularity) is determined by the following expression.

$$\psi = 4\pi S/L^2$$

$\psi$: sphericity (circularity)
$\pi$: circle ratio
S: sectional area of secondary particle 2 (area of region surrounded by outline of secondary particle 2)
L: perimeter of secondary particle 2 (length of outline of secondary particle 2)

The sphericity is an arithmetic average of 30 secondary particles 2.

The primary particle 1 may have any shape. The primary particle 1 may have, for example, a spherical shape, a rod shape, or an angular shape. The maximum Feret diameter of the primary particle 1 may be, for example, 10 nm to 90 nm. The maximum Feret diameter of the primary particle 1 may be, for example, 20 nm or more, 30 nm or more, 40 nm or more, 50 nm or more, 60 nm or more, 70 nm or more, or 80 nm or more. The maximum Feret diameter of the primary particle 1 may be, for example, 80 nm or less, or 60 nm or less. The maximum Feret diameter of the primary particle 1 is an arithmetic average of 30 primary particles 1.

The coating 5 contains carbon (C). The coating 5 covers at least part of the surface of the primary particle 1. The coating 5 may cover the entire surface of the primary particle 1.

The thickness of the coating 5 may be, for example, 1 nm or more, 2 nm or more, 3 nm or more, 4 nm or more, or 5 nm or more. The thickness of the coating 5 may be, for example, 10 nm or less, 9 nm or less, 8 nm or less, 7 nm or less, 6 nm or less, or 5 nm or less.

The mass fraction of the coating 5 may be 0.1% or more, 0.5% or more, 1% or more, 2% or more, 3% or more, or 4% or more with respect to the mass of the olivine phosphate compound. The mass fraction of the coating 5 may be 5% or less, 4% or less, or 3% or less with respect to the mass of the olivine phosphate compound.

The primary particle 1 contains the olivine phosphate compound. "Olivine" refers to a crystal structure belonging to the space group Pnma. The space group is identified by powder X-ray diffraction (XRD) measurement. The primary particle 1 may be, for example, a single-phase compound. As long as the primary particle 1 contains the olivine crystal phase, it may further contain a phase belonging to another space group. The primary particle 1 may further contain, for example, an amorphous phase.

The primary particle (olivine phosphate compound) is doped with an element Me. Me is a typical metal element serving as a divalent cation. Me may include, for example, at least one selected from the group consisting of beryllium (Be), magnesium (Mg), calcium (Ca), strontium (Sr), barium (Ba), radium (Ra), Zn, and cadmium (Cd). Me may include Zn. Me may be Zn.

At least one selected from the group consisting of an Me-C bond and an Me-O-C bond is detected by XPS. That is, the chemical bonding state of elements in the coating 5 includes at least one selected from the group consisting of the Me-C bond and the Me-O-C bond. The Me-C bond and the Me-O-C bond may be detected by XPS.

The primary particle 1 may include at least one selected from the group consisting of the Me-C bond and the Me-O-C bond. For example, the primary particle 1 may include at least one selected from the group consisting of the Me-C bond and the Me-O-C bond in the vicinity of the surface. The "vicinity of the surface" refers to a region of 10 nm, 5 nm, or 3 nm from the interface between the primary particle 1 and the coating 5. For example, at least one selected from the group consisting of the Me-C bond and the Me-O-C bond may be included within a predetermined range of the maximum Feret diameter of the primary particle 1 from the interface between the primary particle 1 and the coating 5. The "predetermined range" refers to a region of 10%, 5%, or 3%.

The olivine phosphate compound includes at least one selected from the group consisting of LMP and LMFP. The olivine phosphate compound (LMFP) may have, for example, a composition represented by the following general formula.

$$Li_aMn_bFe_cMe_dPO_4$$

For example, relationships of $0.7 \leq a \leq 1.2$, $0.5 \leq b \leq 0.9$, $0.1 \leq c \leq 0.5$, $0.005 \leq d \leq 0.05$, and $b + c + d = 1$ may be satisfied.

For example, "a" may be 0.75 or more, 0.8 or more, 0.85 or more, 0.9 or more, 0.95 or more, or 1.0 or more. For example, "a" may be 1.15 or less, 1.1 or less, 1.05 or less, or 1.0 or less. For example, "b" may be 0.55 or more, 0.6 or more, 0.65 or more, or 0.7 or more. For example, "b" may be 0.85 or less, 0.8 or less, 0.75 or less, or 0.7 or less. For example, "c" may be 0.15 or more, 0.2 or more, 0.25 or more, or 0.3 or more. For example, "c" may be 0.45 or less, 0.4 or less, 0.35 or less, or 0.3 or less. For example, "d" may be 0.01 or more, 0.015 or more, 0.02 or more, 0.025 or more, or 0.03 or more. For example, "d" may be 0.045 or less, 0.04 or less, 0.035 or less, or 0.03 or less.

In the above general formula, a relationship of "$d/(b + c) \geq 0.01$" may be satisfied. For example, a relationship of $d/(b + c) \geq 0.015$, $d/(b + c) \geq 0.02$, or $d/(b + c) \geq 0.025$ may be satisfied. For example, a relationship of $d/(b + c) \leq 0.053$, $d/(b + c) \leq 0.048$, $d/(b + c) \leq 0.042$, $d/(b + c) \leq 0.037$, or $d/(b + c) \leq 0.031$ may be satisfied. For example, a relationship of $0.01 \leq d/(b + c) \leq 0.053$ may be satisfied.

The cathode active material may further contain other components as long as it contains either or both of LMP and LMFP. The other components may include, for example, lithium iron phosphate (LFP), lithium nickel composite oxide (LNO), lithium cobalt composite oxide (LCO), or lithium manganese composite oxide (LMO). The mixing ratio (mass ratio) of LMFP to the other components may be, for example, "LMFP/other components = 9/1 to 1/9," "LMFP/other components = 8/2 to 2/8," "LMFP/other components = 7/3 to 3/7," or "LMFP/other components = 6/4 to 4/6." The cathode active material may be, for example, a mixture of a LMFP powder and powders of the other components.

LFP may have, for example, a composition represented by a general formula "$Li_{1-a}FePO_4$ ($-0.5 \leq a \leq 0.5$)." LMP may have, for example, a composition represented by a general formula "$Li_{1-a}MnPO_4$ ($-0.5 \leq a \leq 0.5$)."

LNO may have, for example, a crystal structure belonging to the space group R-3m. LNO may have, for example, a composition represented by the following general formula.

$$Li_{1-a}Ni_xM_{1-x}O_2$$

In the formula, relationships of $-0.5 \leq a \leq 0.5$ and $0 \leq x \leq 1$ are satisfied. For example, M may include at least one selected from the group consisting of Co, Mn, and Al. For example, **a relationship** of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$ may be satisfied. For example, a relationship of $-0.4 \leq a \leq 0.4$, $-0.3 \leq a \leq 0.3$, $-0.2 \leq a \leq 0.2$, or $-0.1 \leq a \leq 0.1$ may be satisfied.

LNO may include, for example, at least one selected from the group consisting of $LiNi_{0.9}Co_{0.1}O_2$, $LiNi_{0.9}Mn_{0.1}O_2$, and $LiNiO_2$.

LNO may be represented by, for example, the following general formula. The compound represented by the following general formula may also be referred to as "NCM."

$$Li_{1-a}Ni_xCo_yMn_zO_2$$

In the formula, relationships of $-0.5 \leq a \leq 0.5$, $0 < x < 1$, $0 < y < 1$, $0 < z < 1$, and $x + y + z = 1$ are satisfied. For example, a relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. For example, a relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. For example, a relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCM may include, for example, at least one selected from the group consisting of $LiNi_{1/3}Co_{1/3}Mn_{1/3}O_2$,

$LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

LNO may be represented by, for example, the following general formula. The compound represented by the following general formula may also be referred to as "NCA."

$$Li_{1-a}Ni_xCo_yAl_zO_2$$

In the formula, relationships of $-0.5 \leq a \leq 0.5$, $0 < x < 1$, $0 < y < 1$, $0 < z < 1$, and $x + y + z = 1$ are satisfied. For example, a relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. For example, a relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. For example, a relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

Method for Producing Cathode Active Material

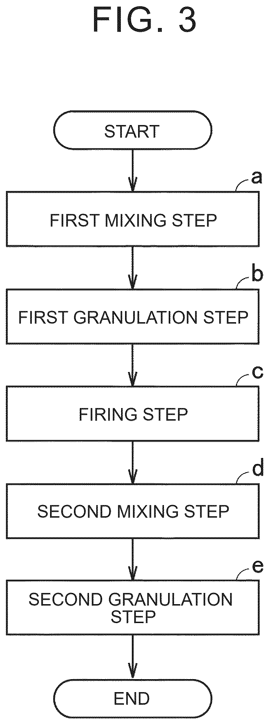

FIG. 3 is a schematic flowchart showing a method for producing a cathode active material according to the present embodiment. Hereinafter, the "method for producing a cathode active material according to the present embodiment" may be abbreviated to "present method." The present method may include, for example, "(a) first mixing step," "(b) first granulation step," "(c) firing step," "(d) second mixing step," and "(e) second granulation step."

(a) First Mixing Step

This step is a step of forming a first slurry by mixing a manganese compound, a lithium compound, a phosphate compound, a carbon source, and a first solvent. Hereinafter, an example of producing LMFP as the cathode active material will be described. However, the cathode active material in the present disclosure is not limited to LMFP.

For example, the manganese compound, the lithium compound, the phosphate compound, and the iron compound may be weighed to achieve a composition ratio (mole ratio) represented by the composition formula "$Li_aMn_bFe_cPO_4$ ($0.7 \leq a \leq 1.2$, $0.5 \leq b \leq 0.9$, $0.1 \leq c \leq 0.5$)." The manganese compound may include, for example, manganese carbonate. The lithium compound may include, for example, lithium hydroxide. The phosphate compound may include, for example, lithium dihydrogen phosphate. The iron compound may include, for example, ferric phosphate.

The carbon source is the raw material of the coating. The carbon source may include, for example, sugars or organic acids. The carbon source may include, for example, glucose, sucrose, fructose, or citric acid. The addition amount of the carbon source may be, for example, 1% to 20% by mass with respect to the raw material mixture.

The first solvent may include, for example, water. The solid content concentration of the first slurry may be, for example, 20% to 40% by mass.

The particle size in the first slurry may be adjusted by performing wet milling. For example, the wet milling may be performed such that the D50 is 0.10 μm to 1 μm.

(b) First Granulation Step

This step is a step of forming first precursor particles by drying the first slurry.

For example, the first precursor particles may be obtained by granulation using a spray drying method. The inlet temperature may be, for example, 230°C to 270°C. The outlet temperature may be, for example, 100°C to 130°C. The intake pressure may be, for example, 1.8 MPa to 2.2 MPa. The nozzle pressure of a spray nozzle may be, for example, 0.1 MPa to 0.3 MPa.

(c) First Firing Step

This step is a step of forming second precursor particles by subjecting the first precursor particles to first heat treatment.

Any heat treatment furnace (e.g., an electric furnace or a muffle furnace) can be used. The atmosphere in this step may be, for example, an inert atmosphere. The inert atmosphere may be, for example, a nitrogen atmosphere. The first heat treatment temperature may be, for example, 400°C to 700°C. The first heat treatment time may be, for example, 4 hours to 6 hours. In the temperature rising process during firing, the temperature rise may be stopped at about 200°C and the temperature may be maintained at 200°C for about one hour instead of being raised continuously.

(d) Second Mixing Step

This step is a step of forming a second slurry by mixing the second precursor particles, a chelate compound, and a second solvent.

The chelate compound is the source of C and Me in the coating. The chelate compound contains Me and a ligand. The ligand includes, for example, a sugar carboxylic acid. The sugar carboxylic acid may include, for example, maltobionic acid, isomaltobionic acid, maltotrionic acid, isomaltotrionic acid, maltohexanoic acid, maltotetraonic acid, cellobionic acid, or lactobionic acid. When Me is Zn, the chelate compound may be, for example, zinc maltobionate. The addition amount of the chelate compound may be, for example, 0.1% to 10% by mass with respect to the second precursor particles.

The second solvent may include, for example, water. The solid content concentration of the second slurry may be, for example, 10% to 30% by mass.

(e) Second Granulation Step

This step is a step of producing an olivine phosphate compound by drying the second slurry.

For example, the olivine phosphate compound may be produced by a spray drying method. The inlet temperature may be, for example, 230°C to 270°C. The outlet temperature may be, for example, 100°C to 130°C. The intake pressure may be, for example, 1.8 MPa to 2.2 MPa. The nozzle pressure of a spray nozzle may be, for example, 0.1 MPa to 0.3 MPa.

Battery

In some aspects of the present embodiment, a battery has a monopolar structure. In some aspects of the present embodiment, the battery has a bipolar structure. The battery having the bipolar structure (bipolar battery) will be described as an example.

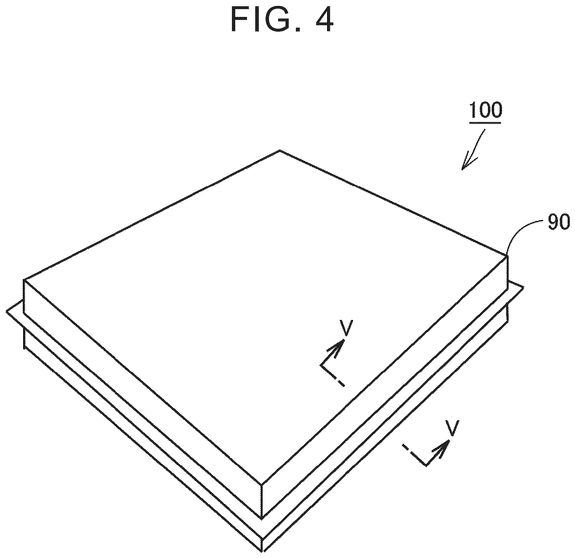

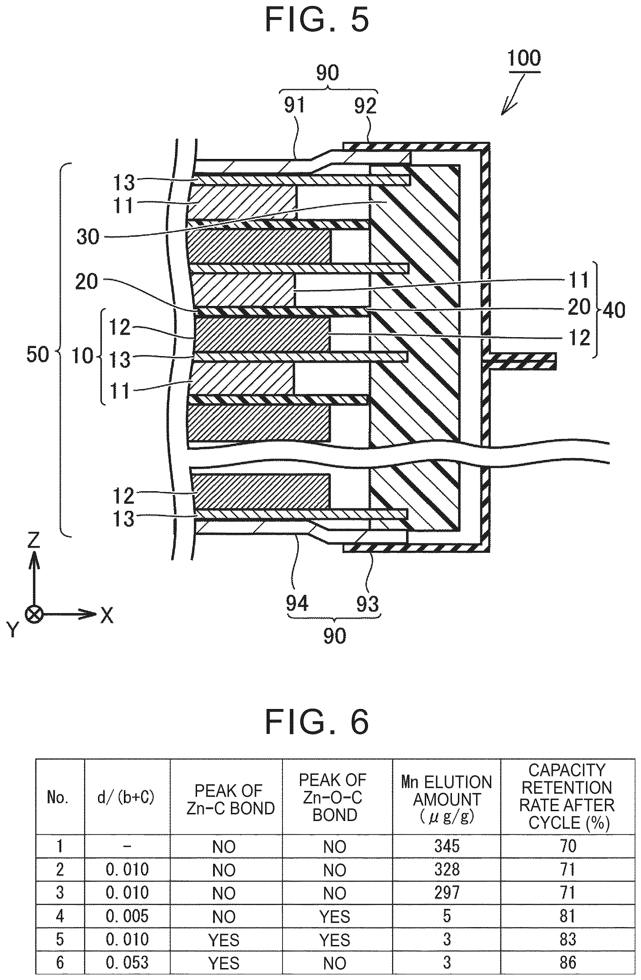

FIG. 4 is a schematic perspective view of the battery according to the present embodiment. FIG. 5 is a schematic sectional view taken along line V-V in FIG. 4. Hereinafter, a "surface-perpendicular direction" refers to a direction normal to the surface of a sheet-shaped member (e.g., a foil or an electrode). An "in-plane direction" refers to any direction orthogonal to the surface-perpendicular direction. In FIG. 5, the Z-axis direction corresponds to the surface-perpendicular direction. The X-axis direction and the Y-axis direction are examples of the in-plane direction.

A battery 100 includes an outer casing 90 and a power generating element 50. The outer casing 90 houses the power generating element 50. The outer casing 90 may include, for example, a first current collecting plate 91, a first laminate film 92, a second laminate film 93, and a second current collecting plate 94. The first laminate film 92 and the second laminate film 93 are joined to each other at their ends in the in-plane direction. At the joint between the first laminate film 92 and the second laminate film 93, a sealant (not shown) may be interposed between the first laminate film 92 and the second laminate film 93.

The first current collecting plate 91 and the second current collecting plate 94 are joined to the power generating element 50 at their ends in a laminating direction (Z-axis direction). The first laminate film 92 is joined to the first current collecting plate 91. The second laminate film 93 is joined to the second current collecting plate 94. At the joint between the current collecting plate and the laminate film, a sealant (not shown) may be interposed between the current collecting plate and the laminate film.

The power generating element 50 includes a plurality of bipolar electrodes 10. The bipolar electrodes 10 are laminated in the surface-perpendicular direction (Z-axis direction). Each of the bipolar electrodes 10 includes a cathode layer 11, a current collecting foil 13, and an anode layer 12 in this order in the surface-perpendicular direction. In the in-plane direction (e.g., the X-axis direction), the current collecting foil 13 extends outward of the cathode layer 11 and the anode layer 12. For example, the current collecting foil 13 may extend outward of the cathode layer 11 and the anode layer 12 over the entire circumference in the in-plane directions.

The current collecting foil 13 is a conductor. The current collecting foil 13 may include, for example, a metal foil and a conductive resin layer. For example, the current collecting foil 13 may be formed by bonding an Al foil and a Cu foil together. The surface of the current collecting foil 13 may be coated with a carbon material. The carbon material may include, for example, carbon black.

The power generating element 50 includes a sealant 30. The sealant 30 is joined to the current collecting foil 13 at its end in the in-plane direction. The sealant 30 may be, for example, thermally welded to the current collecting foil 13. For example, the sealant 30 may be disposed over the entire circumference in the in-plane directions. The sealant 30 may include, for example, a resin material. The sealant 30 seals the space between the current collecting foils 13 adjacent to each other in the surface-perpendicular direction. The space between the current collecting foils 13 is sealed with the sealant 30 to define a cell 40. The cell 40 is the smallest unit of the power generating element 50. Since the battery 100 includes a plurality of cells 40, it may also be referred to as "bipolar module." Each of the cells 40 is sealed. The cells 40 are isolated from one another. Each of the cells 40 includes the cathode layer 11, a separator 20, the anode layer 12, and an electrolyte solution.

Cathode Layer

The cathode layer 11 adheres to one surface of the current collecting foil 13. For example, grooves may be formed in the cathode layer 11. The cathode layer 11 may be formed in, for example, a stripe pattern. The cathode layer 11 contains a cathode active material. That is, the electrode contains the cathode active material. Details of the cathode active material are as described above.

The cathode layer 11 may further contain, for example, a conductive material and a binder in addition to the cathode active material. For example, 0.1 parts by mass to 10 parts by mass of the conductive material may be contained with respect to 100 parts by mass of the cathode active material. The conductive material may include any component. The conductive material may include, for example, at least one selected from the group consisting of graphite, acetylene black (AB), Ketjenblack (registered trademark), vapor-grown carbon fibers (VGCF), carbon nanotubes (CNT), and graphene flakes (GF).

For example, 0.1 parts by mass to 10 parts by mass of the binder may be contained with respect to 100 parts by mass of the cathode active material. The binder may include any component. The binder may include, for example, at least one selected from the group consisting of polyvinylidene difluoride (PVdF), polyvinylidene difluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinylpyrrolidone (PVP), polyoxyethylene alkyl ether, and derivatives thereof.

The cathode layer 11 may further contain, for example, an inorganic filler, an organic filler, a solid electrolyte, a surface modifier, a dispersant, a lubricant, a flame retardant, a protectant, a flux, a coupling agent, and an adsorbent. The cathode layer 11 may contain, for example, polyoxyethylene allylphenyl ether phosphate, zeolite, a silane coupling agent, $MoS_2$, or $WO_3$.

Anode Layer

The anode layer 12 adheres to one surface of the current collecting foil 13. The anode layer 12 is disposed on the back side of the cathode layer 11. The anode layer 12 may have a larger area than the cathode layer 11. The anode layer 12 contains an anode active material.

The anode active material may be, for example, in the form of particles or a sheet. The D50 of the anode active material may be, for example, 1 $\mu$m or more, 5 $\mu$m or more, or 10 $\mu$m or more. The D50 of the anode active material may be, for example, 30 $\mu$m or less, 20 $\mu$m or less, 15 $\mu$m or less, or 10 $\mu$m or less.

The anode active material may include any component. The anode active material may include, for example, at least one selected from the group consisting of a carbon-based active material, an alloy-based active material, a Si-C composite material, Li metal, a Li-based alloy, and lithium titanate. In some aspects of the present embodiment, the battery may be a Li metal anode battery.

The carbon-based active material may include, for example, at least one selected from the group consisting of graphite, soft carbon, and hard carbon. "Graphite" is a general term for natural graphite and artificial graphite. The graphite may be a mixture of natural graphite and artificial graphite. The mixing ratio (mass ratio) may be, for example, "natural graphite/artificial graphite = 1/9 to 9/1," "natural graphite/artificial graphite = 2/8 to 8/2," or "natural graphite/artificial graphite = 3/7 to 7/3."

The surface of the graphite may be coated with, for example, amorphous carbon. The surface of the graphite may be coated with, for example, a different material. The different material may include, for example, at least one selected from the group consisting of P, W, Al, and O. The different material may include, for example, at least one selected from the group consisting of $Al(OH)_3$, $AlOOH$, $Al_2O_3$, $WO_3$, $Li_2CO_3$, $LiHCO_3$, and $Li_3PO_4$.

The alloy-based active material may include, for example, at least one selected from the group consisting of Si, Li silicate, SiO, a Si-based alloy, tin (Sn), SnO, and a Sn-based alloy.

SiO may be represented by, for example, the following general formula. $SiO_x$
In the formula, a relationship of $0 < x < 2$ is satisfied. For example, a relationship of $0.5 \leq x \leq 1.5$ or $0.8 \leq x \leq 1.2$ may be satisfied.

"Si-C composite material" refers to a composite material of a carbon-based active material (such as graphite) and an alloy-based active material (such as Si). For example, fine Si particles may be dispersed within carbon particles. For example, fine Si particles may be dispersed within graphite particles. For example, Li silicate particles may be coated with a carbon material (amorphous carbon etc.).

Separator

The separator 20 can separate the cathode layer 11 from the anode layer 12. The separator 20 has electrical insulation properties. The separator 20 may include, for example, at least one selected from the group consisting of a resin film (polymer film), an inorganic particle layer, and an organic particle layer. The separator 20 may include, for example, the resin film and the inorganic particle layer.

The resin film is porous. The resin film may include, for example, a microporous film or a nonwoven fabric. The resin film includes a resin skeleton. The resin skeleton may be continuous, for example, in the form of a net. Pores are formed in the gaps in the resin skeleton. The resin film is permeable to an electrolyte solution. The resin film may have an average pore size of, for example, 1 μm or less. The resin film may have an average pore size of, for example, 0.01 μm to 1 μm, or 0.1 μm to 0.5 μm. The "average pore size" can be measured by mercury porosimetry. The Gurley value of the resin film may be, for example, 50 s/100 cm$^3$ to 250 s/100 cm$^3$. The "Gurley value" can be measured by the Gurley test method.

The resin film may include, for example, at least one selected from the group consisting of an olefin resin, a polyurethane resin, a polyamide resin, a cellulose resin, a polyether resin, an acrylic resin, and a polyester resin. The resin film may include, for example, at least one selected from the group consisting of polyethylene (PE), polypropylene (PP), polyamide (PA), polyamideimide (PAI), polyimide (PI), aromatic polyamide (aramid), polyphenylene ether (PPE), and derivatives thereof. The resin film can be formed by, for example, a stretching method or a phase separation method. The thickness of the resin film may be, for example, 5 μm to 50 μm, or 10 μm to 25 μm.

The resin film may have, for example, a single-layer structure. The resin film may be made of, for example, a PE layer. The skeleton of the PE layer is formed by PE. The PE layer may have a shutdown function. The resin film may have, for example, a multilayer structure. The resin film may include, for example, a PP layer and a PE layer. The skeleton of the PP layer is formed by PP. The resin film may have, for example, a three-layer structure. The resin film may be formed by, for example, laminating a PP layer, a PE layer, and a PP layer in this order. The thickness of the PE layer may be, for example, 5 μm to 20 μm. The thickness of the PP layer may be, for example, 3 μm to 10 μm.

The inorganic particle layer may be formed on the surface of the resin film. The inorganic particle layer may be formed on only one surface of the resin film, or on both surfaces. The inorganic particle layer may be formed on the surface facing the cathode layer 11 or on the surface facing the anode layer 12. The inorganic particle layer may be formed on the surface of the cathode layer 11 or on the surface of the anode layer 12.

The inorganic particle layer is porous. The inorganic particle layer includes inorganic particles. The inorganic particles may also be referred to as "inorganic fillers." Pores are formed in the gaps between the inorganic particles. The thickness of the inorganic particle layer may be, for example, 0.5 μm to 10 μm, or 1 μm to 5 μm. The inorganic particle may contain, for example, a heat-resistant material. The inorganic particle layer containing the heat-resistant material is also referred to as "heat resistance layer (HRL)." The inorganic particle may contain at least one selected from the group consisting of boehmite, alumina, zirconia, titania, magnesia, silica, etc. The inorganic particle may have any shape. The inorganic particle may have, for example, a spherical shape, a rod shape, a plate shape, or a fibrous shape. The D50 of the inorganic particle may be, for example, 0.1 μm to 10 μm, or 0.5 μm to 3 μm. The inorganic particle layer may further contain a binder. The binder may include, for example, at least one selected from the group consisting of an acrylic resin, a polyamide resin, a fluorine resin, an aromatic polyether resin, and a liquid crystal polyester resin.

The separator 20 may include, for example, the organic particle layer. The separator 20 may include, for example, the organic particle layer instead of the resin film. The separator 20 may include, for example, the organic particle layer instead of the inorganic particle layer. The separator 20 may include both the resin film and the organic particle layer. The separator 20 may include both the inorganic particle layer and the organic particle layer. The separator 20 may include the resin film, the inorganic particle layer, and the organic particle layer.

The thickness of the organic particle layer may be, for example, 0.1 μm to 50 μm, 0.5 μm to 20 μm, 0.5 μm to 10 μm, or 1 μm to 5 μm. The organic particle layer includes organic particles. The organic particles may also be referred to as "organic fillers." The organic particle may contain a heat-resistant material. The organic particle may contain, for example, at least one selected from the group consisting of PE, PP, PTFE, PI, PAI, PA, and aramid. The organic particle may have, for example, a spherical shape, a rod shape, a plate shape, or a fibrous shape. The D50 of the organic particle may be, for example, 0.1 μm to 10 μm, or 0.5 μm to 3 μm.

The separator 20 may include, for example, a mixed layer. The mixed layer includes both inorganic and organic particles.

Electrolyte Solution

The electrolyte solution is a liquid electrolyte. The electrolyte solution contains a solute and a solvent. The concentration of the solute may be, for example, 0.5 mol/L to 1 mol/L, 1 mol/L to 1.5 mol/L, 1.5 mol/L to 2 mol/L, 2 mol/L to 2.5 mol/L, or 2.5 mol/L to 3 mol/L. The unit "mol/L" may also be written as "M." The solute includes a supporting salt (Li salt). The solute may include, for example, an inorganic acid salt, an imide salt, an oxalate complex, or a halide. The solute may include, for example, at least one selected from the group consisting of $LiPF_6$, $LiBF_4$, $LiClO_4$, $LiAsF_6$, $LiSbF_6$, $LiN(SO_2F)_2$ "LiFSI," $LiN(SO_2CF_3)_2$ "LiTFSI," $LiB(C_2O_4)_2$ "LiBOB," $LiBF_2(C_2O_4)$ "LiDFOB," $LiPF_2(C_2O_4)_2$ "LiDFOP," $LiPO_2F_2$, $FSO_3Li$, LiI, LiBr, and derivatives thereof.

The electrolyte solution may contain, for example, a carbonate solvent (carbonate ester solvent). The solvent may include, for example, a cyclic carbonate, a chain carbonate, or a fluorinated carbonate. The solvent may include, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives thereof.

The solvent may include a cyclic carbonate (EC, PC, FEC, etc.) and a chain carbonate (EMC, DMC, DEC, etc.). The mixing ratio (volume ratio) of the cyclic carbonate to the chain carbonate may be, for example, "cyclic carbonate/chain carbonate = 1/9 to 4/6," "cyclic carbonate/chain carbonate = 2/8 to 3/7," or "cyclic carbonate/chain carbonate = 3/7 to 4/6."

The solvent may include a cyclic carbonate (EC, PC, etc.) and a fluorinated cyclic carbonate (FEC etc.). The mixing ratio (volume ratio) of the cyclic carbonate to the fluorinated cyclic carbonate may be, for example, "cyclic carbonate/fluorinated cyclic carbonate = 99/1 to 90/10," "cyclic carbonate/fluorinated cyclic carbonate = 9/1 to 1/9," "cyclic carbonate/fluorinated cyclic carbonate = 9/1 to 7/3," or "cyclic carbonate/fluorinated cyclic carbonate = 3/7 to 1/9."

The solvent may include, for example, EC, FEC, EMC, DMC, and DEC. The volume ratio of each component may satisfy a relationship represented by, for example, the following formula.

$$V_{EC} + V_{FEC} + V_{EMC} + V_{DMC} + V_{DEC} = 10$$

In the above formula, $V_{EC}$, $V_{FEC}$, $V_{EMC}$, $V_{DMC}$, and $V_{DEC}$ represent the volume ratios of EC, FEC, EMC, DMC, and DEC, respectively. The following relationships are satisfied: $1 \leq V_{EC} \leq 4$, $0 \leq V_{FEC} \leq 3$, $V_{EC} + V_{FEC} \leq 4$, $0 \leq V_{EMC} \leq 9$, $0 \leq V_{DMC} \leq 9$, $0 \leq V_{DEC} \leq 9$, $6 \leq V_{EMC} + V_{DMC} + V_{DEC} \leq 9$. For example, a relationship of $1 \leq V_{EC} \leq 2$ or $2 \leq V_{EC} \leq 3$ may be satisfied. For example, a relationship of $1 \leq V_{FEC} \leq 2$ or $2 \leq V_{FEC} \leq 4$ may be satisfied. For example, a relationship of $3 \leq V_{EMC} \leq 4$ or $6 \leq V_{EMC} \leq 8$ may be satisfied. For example, a relationship of $3 \leq V_{DMC} \leq 4$ or $6 \leq V_{DMC} \leq 8$ may be satisfied. For example, a relationship of $3 \leq V_{DEC} \leq 4$ or $6 \leq V_{DEC} \leq 8$ may be satisfied.

The solvent may have a composition in volume ratios of, for example, "EC/EMC = 3/7," "EC/DMC = 3/7," "EC/FEC/DEC = 1/2/7," "EC/DMC/EMC = 3/4/3," "EC/DMC/EMC = 3/3/4," "EC/FEC/DMC/EMC = 2/1/4/3," "EC/FEC/DMC/EMC = 1/2/4/3," "EC/FEC/DMC/EMC = 2/1/3/4," or "EC/FEC/DMC/EMC = 1/2/3/4."

The electrolyte solution may contain an ether-based solvent. The electrolyte solution may contain, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives thereof.

The electrolyte solution may contain any additive. The addition amount (mass fraction with respect to the entire electrolyte solution) may be, for example, 0.01% to 5%, 0.05% to 3%, or 0.1% to 1%. The additive may include, for example, a solid electrolyte interphase (SEI) formation promoter, an SEI formation inhibitor, a gas generating agent, an overcharge inhibitor, a flame retardant, an antioxidant, an electrode protectant, or a surfactant.

The additive may include, for example, at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), γ-butyrolactone, a phosphazene compound, a carboxylic acid ester (e.g., methyl formate (MF), methyl acetate (MA), methyl propionate (MP), or diethyl malonate (DEM)), a fluorobenzene (e.g., monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, or hexafluorobenzene), a fluorotoluene (e.g., 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, or octafluorotoluene), a benzotrifluoride (e.g., benzotrifluoride, 2-fluorobenzotrifluoride, 3-fluorobenzotrifluoride, 4-fluorobenzotrifluoride, 2-methylbenzotrifluoride, 3-methylbenzotrifluoride, or 4-methylbenzotrifluoride), a fluoroxylene (e.g., 3-fluoro-o-xylene, 4-fluoro-o-xylene, 2-fluoro-m-xylene, or 5-fluoro-m-xylene), a sulfur-containing heterocyclic compound (e.g., benzothiazole, 2-methylbenzothiazole, or tetrathiafulvalene), a nitrile compound (e.g., adiponitrile or succinonitrile), a phosphate ester (e.g., trimethyl phosphate or triethyl phosphate), a carboxylic acid anhydride (e.g., acetic anhydride, propionic anhydride, oxalic anhydride, succinic anhydride, maleic anhydride, phthalic anhydride, or benzoic anhydride), an alcohol (e.g., methanol, ethanol, n-propyl alcohol, ethylene glycol, or diethylene glycol monomethyl ether), and derivatives thereof.

The components described above as the solute and the solvent may be used as trace components (additives). The additives may include, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives thereof.

The electrolyte solution may include an ionic liquid. The ionic liquid may include, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives thereof.

In some aspects of the present embodiment, the battery may include a gel electrolyte. That is, the battery may be a polymer battery. The gel electrolyte may contain an electrolyte solution and a polymer material. The polymer material may form a polymer matrix. The polymer material may include, for example, at least one selected from the group consisting of PVdF, PVdF-HFP, polyacrylonitrile (PAN), PVdF-PAN, polyethylene oxide (PEO), polyethylene glycol (PEG), and derivatives thereof.

Production of Cathode Active Material

No. 1

(a) First Mixing Step

Lithium hydroxide monohydrate, manganese carbonate, ferric phosphate, and lithium dihydrogen phosphate were weighed to achieve the composition ratio represented by the composition formula "$Li_{1.1}Mn_{0.7}Fe_{0.3}PO_4$." Glucose was weighed in a mass fraction of 5% with respect to the total mass of the raw materials. The weighed materials and water were mixed to form a first slurry. The solid content concentration of the first slurry was 30% by mass. Wet milling was performed such that the D50 was 0.30 $\mu$m.

(b) First Granulation Step

The first slurry was subjected to spray drying to form first precursor particles. The inlet temperature was 250°C, the outlet temperature of a spray dryer was 115±15°C, the intake pressure was 2.0 MPa, and the nozzle pressure of a spray nozzle was 0.2±0.1 MPa. The target value of D50 for the first precursor particles was 9±1 $\mu$m.

(c) First Firing Step

The first precursor particles were fired in a nitrogen atmosphere to synthesize a cathode active material (LMFP). The conditions for this step are as follows. First, the furnace temperature is raised to 200°C at a temperature rising rate of 3°C/min. The furnace temperature is maintained at 200°C for 1 hour. Next, the furnace temperature is raised to 650°C at a temperature rising rate of 5°C/min. The furnace temperature is maintained at 650°C for 5 hours. Then, the furnace temperature is dropped to 400°C at a temperature dropping rate of 2°C/min. The furnace temperature is further dropped to room temperature at a temperature dropping rate of 15°C/min.

No. 2

(a) First Mixing Step

Lithium hydroxide monohydrate, manganese carbonate, ferric phosphate, zinc oxide, and lithium dihydrogen phosphate were weighed to achieve the composition ratio represented by the composition formula "$Li_{1.1}Mn_{0.69}Fe_{0.3}Zn_{0.01}PO_4$." Glucose was weighed in a mass fraction of 5% with respect to the total mass of the raw materials. The weighed materials and water were mixed to form a first slurry. The solid content concentration of the first slurry was 30% by mass. Wet milling was performed such that the D50 was 0.30 $\mu$m.

Steps (b) and (c) were performed under the same conditions as in No. 1.

No. 3

(a) First Mixing Step

Lithium hydroxide monohydrate, manganese carbonate, ferric phosphate, and lithium dihydrogen phosphate were weighed to achieve the composition ratio represented by the composition formula "$Li_{1.1}Mn_{0.69}Fe_{0.3}PO_4$." Glucose was weighed in a mass fraction of 5% with respect to the total mass of the raw materials. The weighed materials and water were mixed to form a first slurry. The solid content concentration of the first slurry was 30% by mass. Wet milling was performed such that the D50 was 0.30 $\mu$m.

Steps (b) and (c) were performed under the same conditions as in No. 1. The LMFP in No. 1 is assumed to be "second precursor particles" described below.

(d) Second Mixing Step

The second precursor particles and zinc oxide were weighed to achieve the composition ratio represented by the composition formula "$Li_{1.1}Mn_{0.69}Fe_{0.3}Zn_{0.01}PO_4$." The second precursor particles, zinc oxide, and water were mixed to form a second slurry.

(e) Second Granulation Step

The second slurry was subjected to spray drying to produce LMFP. The inlet temperature was 250°C, the outlet temperature of a spray dryer was 115±15°C, the intake pressure was 2.0 MPa, and the nozzle pressure of a spray nozzle was 0.2±0.1 MPa.

No. 4

Lithium hydroxide monohydrate, manganese carbonate, ferric phosphate, and lithium dihydrogen phosphate were weighed to achieve the composition ratio represented by the composition formula "$Li_{1.1}Mn_{0.695}Fe_{0.3}PO_4$." Glucose was weighed in a mass fraction of 5% with respect to the total mass of the raw materials. The weighed materials and water were mixed to form a first slurry. The solid content concentration of the first slurry was 30% by mass. Wet milling was performed such that the D50 was 0.30 $\mu$m.
Steps (b) and (c) were performed under the same conditions as in No. 1.

(d) Second Mixing Step

The second precursor particles and zinc maltobionate were weighed to achieve the composition ratio represented by the composition formula "$Li_{1.1}Mn_{0.695}Fe_{0.3}Zn_{0.005}PO_4$." The second precursor particles, zinc maltobionate, and water were mixed to form a second slurry.
Step (e) was performed under the same conditions as in No. 3.

No. 5

Lithium hydroxide monohydrate, manganese carbonate, ferric phosphate, and lithium dihydrogen phosphate were weighed to achieve the composition ratio represented by the composition formula "$Li_{1.1}Mn_{0.69}Fe_{0.3}PO_4$." Glucose was weighed in a mass fraction of 5% with respect to the total mass of the raw materials. The weighed materials and water were mixed to form a first slurry. The solid content concentration of the first slurry was 30% by mass. Wet milling was performed such that the D50 was 0.30 $\mu$m.
Steps (b) and (c) were performed under the same conditions as in No. 1.

(d) Second Mixing Step

The second precursor particles and zinc maltobionate were weighed to achieve the composition ratio represented by the composition formula "$Li_{1.1}Mn_{0.69}Fe_{0.3}Zn_{0.01}PO_4$." The second precursor particles, zinc maltobionate, and water were mixed to form a second slurry.
Step (e) was performed under the same conditions as in No. 3.

No. 6

Lithium hydroxide monohydrate, manganese carbonate, ferric phosphate, and lithium dihydrogen phosphate were weighed to achieve the composition ratio represented by the composition formula "$Li_{1.1}Mn_{0.65}Fe_{0.3}PO_4$." Glucose was weighed in a mass fraction of 5% with respect to the total mass of the raw materials. The weighed materials and water were mixed to form a first slurry. The solid content concentration of the first slurry was 30% by mass. Wet milling was performed such that the D50 was 0.30 $\mu$m.
Steps (b) and (c) were performed under the same conditions as in No. 1.

(d) Second Mixing Step

The second precursor particles and zinc maltobionate were weighed to achieve the composition ratio represented by the composition formula "$Li_{1.1}Mn_{0.65}Fe_{0.3}Zn_{0.05}PO_4$." The second precursor particles, zinc maltobionate, and water were mixed to form a second slurry.

Step (e) was performed under the same conditions as in No. 3.

Manufacturing of Cylindrical Cell

A cylindrical lithium-ion secondary battery (cylindrical cell) was manufactured. The cell configuration is as follows.

Power generating element: wound type

Cathode: LMFP/AB/PAN = 88/10/2 (mass ratio)
Anode: anode active material (natural graphite), CMC, SBR
Electrolyte: $LiPF_6$ (1 mol/L), EC/DMC/EMC = 3/4/3 (volume ratio)

The cathode and the anode were each produced by applying a slurry to the surface of a substrate (metal foil). A film applicator (with a film thickness control function) manufactured by Allgood Co., Ltd. was used as a coating device. After applying the slurry, the coating was dried at 80°C for 5 minutes.

Evaluation

Measurement

XPS analysis was performed by the above method, and the presence or absence of the Zn-C bond and the Zn-O-C bond was checked. The results are shown in FIG. 6. Further, the Mn elution amount ($\mu$g/g) was determined. The results are shown in FIG. 6. The Mn elution amount is based on 1 g of the anode.

Durability

The cylindrical cell was charged and discharged 200 times at a constant current of 2C in a voltage range of 3.0 V to 4.1 V under a room temperature environment. The capacity retention rate (percentage) was determined by dividing the 200th discharge capacity by the initial discharge capacity. The capacity retention rate is shown in FIG. 6. It is believed that the durability is better as the capacity retention rate increases. "C" is a symbol indicating the rate (time rate) of current. At a rate of 1C, the theoretical capacity is discharged in one hour.

Results

As shown in FIG. 6, when the conditions of the present disclosure are satisfied, there is a tendency for the durability to improve. In Nos. 5 and 6 in which the relationship of d/(b + c) ≥ 0.01 is satisfied, there is a tendency for the durability to further improve.

**Claims**

1.  A cathode active material comprising a primary particle (1) and a coating (5), wherein

    the primary particle (1) includes an olivine phosphate compound,
    the olivine phosphate compound includes at least one selected from the group consisting of lithium manganese phosphate and lithium manganese iron phosphate,
    the primary particle (1) is doped with Me,
    the Me is a typical metal element serving as a divalent cation,
    the coating (5) covers at least part of a surface of the primary particle (1),
    the coating (5) contains carbon, and
    at least one selected from the group consisting of an Me-C bond and an Me-O-C bond is detected by X-ray photoelectron spectroscopy.

2.  The cathode active material according to claim 1, wherein the Me contains Zn.

3.  The cathode active material according to claim 1, wherein

    the olivine phosphate compound has a composition represented by a general formula: $Li_aMn_bFe_cMe_dPO_4$, and

in the general formula, relationships of $0.7 \leq a \leq 1.2$, $0.5 \leq b \leq 0.9$, $0.1 \leq c \leq 0.5$, $0.005 \leq d \leq 0.05$, and $b + c + d = 1$ are satisfied.

4. The cathode active material according to claim 3, wherein, in the general formula, a relationship of $d/(b + c) \geq 0.01$ is satisfied.

5. The cathode active material according to claim 1, wherein

   the primary particle (1) constitutes a secondary particle (2),
   the primary particle (1) is a single particle, and
   the secondary particle (2) is an aggregate of a plurality of the primary particle (1).

6. A battery (100) comprising the cathode active material according to any one of claims 1 to 5.

7. The battery (100) according to claim 6, further comprising a bipolar structure.

8. A method for producing a cathode active material, the method comprising:

   forming a first slurry by mixing a manganese compound, a lithium compound, a phosphate compound, a carbon source, and a first solvent;
   forming first precursor particles by drying the first slurry;
   (c) forming second precursor particles by subjecting the first precursor particles to first heat treatment;
   forming a second slurry by mixing the second precursor particles, a chelate compound, and a second solvent; and
   producing an olivine phosphate compound by drying the second slurry, wherein
   the olivine phosphate compound includes a coating (5),
   the chelate compound includes Me,
   the Me is a typical metal element serving as a divalent cation, and
   the olivine phosphate compound is doped with at least part of the Me.

9. The method for producing the cathode active material according to claim 8, wherein the chelate compound includes a sugar carboxylic acid.

# FIG. 1

# FIG. 2

# FIG. 3

```
          ┌──────────┐
          │  START   │
          └────┬─────┘
               │
               ▼              ⌐a
     ┌─────────────────────┐
     │  FIRST MIXING STEP   │
     └──────────┬──────────┘
               │
               ▼              ⌐b
     ┌─────────────────────┐
     │ FIRST GRANULATION STEP │
     └──────────┬──────────┘
               │
               ▼              ⌐c
     ┌─────────────────────┐
     │    FIRING STEP       │
     └──────────┬──────────┘
               │
               ▼              ⌐d
     ┌─────────────────────┐
     │  SECOND MIXING STEP  │
     └──────────┬──────────┘
               │
               ▼              ⌐e
     ┌─────────────────────┐
     │ SECOND GRANULATION   │
     │       STEP           │
     └──────────┬──────────┘
               │
               ▼
          ┌──────────┐
          │   END    │
          └──────────┘
```

# FIG. 4

# FIG. 5

# FIG. 6

| No. | d/(b+C) | PEAK OF Zn-C BOND | PEAK OF Zn-O-C BOND | Mn ELUTION AMOUNT ($\mu$g/g) | CAPACITY RETENTION RATE AFTER CYCLE (%) |
|---|---|---|---|---|---|
| 1 | – | NO | NO | 345 | 70 |
| 2 | 0.010 | NO | NO | 328 | 71 |
| 3 | 0.010 | NO | NO | 297 | 71 |
| 4 | 0.005 | NO | YES | 5 | 81 |
| 5 | 0.010 | YES | YES | 3 | 83 |
| 6 | 0.053 | YES | NO | 3 | 86 |

EP 4 768 430 A1

## EUROPEAN SEARCH REPORT

**Application Number**

EP 25 22 6396

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2015 122327 A (LG CHEMICAL LTD) 2 July 2015 (2015-07-02) | 1-7 | INV.<br>C01B25/45 |
| A | * paragraphs [0016] - [0029] *<br>* paragraph [0017] *<br>* paragraphs [0039] - [0041] *<br>* paragraph [0067] * | 8,9 | H01M4/136<br>H01M4/36<br>H01M4/58<br>H01M4/62<br>H01M10/0525 |
| Y | ----- <br>EP 4 228 033 A1 (CONTEMPORARY AMPEREX TECHNOLOGY CO LTD [CN]) 16 August 2023 (2023-08-16) | 8,9 | |
| A | * paragraph [0026] *<br>* paragraphs [0029] - [0033] *<br>* paragraph [0034] *<br>* paragraphs [0035] - [0037] * | 1-7 | |
| Y | ----- <br>US 2012/301780 A1 (KITAGAWA KAN [JP] ET AL) 29 November 2012 (2012-11-29) | 8,9 | |
| A | * paragraphs [0021], [0039], [0045], [0050] - [0054] *<br>* paragraph [0051] * | 1-7 | |
| A | ----- <br>JP 2017 514781 A (TRAN, NICOLAS ET AL.) 8 June 2017 (2017-06-08) * paragraphs [0001] - [0004], [0026] * | 8 | TECHNICAL FIELDS SEARCHED (IPC)<br><br>H01M |
| A | ----- <br>CN 115 064 675 A (HEFEI GUOXUAN HIGH TECH POWER ENERGY CO LTD) 16 September 2022 (2022-09-16) * paragraphs [0001] - [0008] * | 1-7 | |
| A | ----- <br>CN 118 658 977 A (TIANJIN RONGBAI SIKELANDE TECH CO LTD) 17 September 2024 (2024-09-17) * paragraphs [0077] - [0078], [0110] * | 8 | |
| A | ----- <br>WO 2024/205085 A1 (SAMSUNG SDI CO LTD [KR]) 3 October 2024 (2024-10-03) * paragraphs [0001] - [0010], [0087] * | 1-7 | |
| | ----- | | |

The present search report has been drawn up for all claims

| Place of search | Date of completion of the search | Examiner |
|---|---|---|
| The Hague | 6 February 2026 | Martin, Andréa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

20

## ANNEX TO THE EUROPEAN SEARCH REPORT
## ON EUROPEAN PATENT APPLICATION NO.

EP 25 22 6396

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2026

| Patent document cited in search report | Publication date | Patent family member(s) | Publication date |
|---|---|---|---|
| JP 2015122327 A | 02-07-2015 | CN 102893432 A<br>EP 2562857 A2<br>JP 6042324 B2<br>JP 6124929 B2<br>JP 2013525975 A<br>JP 2015122327 A<br>KR 20110117619 A<br>US 2013216902 A1<br>WO 2011132931 A2 | 23-01-2013<br>27-02-2013<br>14-12-2016<br>10-05-2017<br>20-06-2013<br>02-07-2015<br>27-10-2011<br>22-08-2013<br>27-10-2011 |
| EP 4228033 A1 | 16-08-2023 | CN 116998031 A<br>EP 4228033 A1<br>US 2023299276 A1<br>WO 2023123052 A1 | 03-11-2023<br>16-08-2023<br>21-09-2023<br>06-07-2023 |
| US 2012301780 A1 | 29-11-2012 | CN 102800861 A<br>JP 5736965 B2<br>JP 2012248378 A<br>US 2012301780 A1 | 28-11-2012<br>17-06-2015<br>13-12-2012<br>29-11-2012 |
| JP 2017514781 A | 08-06-2017 | CN 106458587 A<br>EP 3140254 A1<br>JP 6646589 B2<br>JP 2017514781 A<br>KR 20170003957 A<br>US 2017069908 A1<br>WO 2015170084 A1 | 22-02-2017<br>15-03-2017<br>14-02-2020<br>08-06-2017<br>10-01-2017<br>09-03-2017<br>12-11-2015 |
| CN 115064675 A | 16-09-2022 | NONE | |
| CN 118658977 A | 17-09-2024 | NONE | |
| WO 2024205085 A1 | 03-10-2024 | CN 120814067 A<br>EP 4439708 A1<br>KR 20240144785 A<br>US 2024322149 A1<br>WO 2024205085 A1 | 17-10-2025<br>02-10-2024<br>04-10-2024<br>26-09-2024<br>03-10-2024 |

EPO FORM P0459

For more details about this annex : see Official Journal of the European Patent Office, No. 12/82

**REFERENCES CITED IN THE DESCRIPTION**

**Patent documents cited in the description**

- JP 2021009838 A